# EUROPEAN PATENT SPECIFICATION

(11) **EP 2 433 782 B1**
(45) Date of publication and mention of the grant of the patent: **28.09.2016**
(21) Application number: 10777398.8
(22) Date of filing: 20.05.2010
(51) Int. Cl.: B29C 70/38, B29D 99/00, B29L 31/08

(54) **SYSTEM FOR AUTOMATICALLY PRODUCING WIND TURBINE BLADES**
SYSTEM ZUR AUTOMATISCHEN HERSTELLUNG VON WINDTURBINENBLÄTTERN
SYSTÈME POUR LA FABRICATION AUTOMATIQUE DE PALES D'ÉOLIENNE

(30) Priority: 21.05.2009 ES 200901263
(43) Date of publication of application: 28.03.2012
(73) Proprietor: Danobat, S. Coop., 20870 Elgoibar (Guipúzcoa) (ES)
(72) Inventor: ARRIOLA ARRIZABALAGA, César, E-20870 Elgoibar (Guipúzcoa) (ES); ERAÑA ACHAGA, Xabier, E-20550 Aretxabaleta (Guipúzcoa) (ES); SASTRE SÁNCHEZ, Mariano, E-28806 Alcalá de Henares (Madrid) (ES); MARTÍNEZ HERRAIZ, Fernando, E-28017 Madrid (ES)
(74) Representative: Cabinet Plasseraud
(86) International application number: PCT/ES2010/000219
(87) International publication number: WO 2010/133729

(56) References cited:
- EP-A1- 2 226 186
- US-A1- 2004 226 651
- US-A1- 2006 260 751
- "Automating turbine blade production", REINFORCED PLASTICS, ELSEVIER ADVANCED TECHNOLOGY, NEW YORK, NY, US, vol. 53, no. 4, 1 May 2009 (2009-05-01), page 15, XP026266198, ISSN: 0034-3617, DOI: 10.1016/S0034-3617(09)70145-6 [retrieved on 2009-05-01]
- WITTIG ET AL: "Process automation for the production of large composite parts", REINFORCED PLASTICS, ELSEVIER ADVANCED TECHNOLOGY, NEW YORK, NY, US, vol. 49, no. 1, 1 January 2005 (2005-01-01), pages 30-33, XP027794253, ISSN: 0034-3617 [retrieved on 2005-01-01]
- "Robots speed lay-up of composite materials", REINFORCED PLASTICS, ELSEVIER ADVANCED TECHNOLOGY, NEW YORK, NY, US, vol. 47, no. 4, 1 April 2003 (2003-04-01), pages 44-47, XP004430109, ISSN: 0034-3617

## Description

### Field of the Art

The present invention relates to the manufacture of wind turbine blades, proposing a system whereby said manufacture is automatic based on using dry fiber mats, i.e., not impregnated, being impregnated with the resin necessary for consolidation during the manufacturing process.

### State of the Art

There are two options among the processes known for manufacturing wind turbine blades, one of which consists of using pre-impregnated composite mats, whereas in the second option basic raw material based on dry fiber mat, which will be referred to hereinafter as "cloth" is used, the said "cloth" mats being supplied by means of reels that can have dimensions which exceed even 4,000 mm in width.

Until today, all known processes for manufacturing wind turbine blades, by means of dry fiber "cloth" are completely manual processes in all their phases, such that, for example, to manufacture one blade a day, over 50 operators in three shifts are required, which entails a slow and expensive process and furthermore does not offer suitable finish conditions, uniformity, precision, etc., since the different phases are performed manually and completely dependent on the operators' criteria, training and skill.

The publication «Automating turbine blade production» published in REINFORCED PLASTICS, ELSEVIER ADVANCED TECHNOLOGY, NEW YORK, NY, US, vol. 53, n. 4, 1 May 2009 (2009-05-01), page 15, relates to a material placement system, which brings automation and process control, and is an automated blade moulding facility capable of spraying in-mould coatings, dispensing/lay-up of glass and carbon fiber materials, and dispensing/application of adhesive. Programmed off line, the computer numerical control system consists of a gantry system with multi-axis end effectors capable of manipulating spray heads and adhesive applicators, as well as tooling for spooling and placing materials. After application of gel-coat with spray-head tooling, a ply-generator with a roll magazine of material cuts and dispenses plies to the lay-up end effector on the gantry. Two such gantry systems adjacent to one another can each produce a wind turbine blade shell half. The blade shell halves can be infused with resin and then the blade is cured. Like the lay-up system, the infusion curing system includes process control.

The patent document EP 2 226 186 A1 discloses a method and manufacturing line for manufacturing wind turbine blades having a composite shell structure comprising a matrix material and a fibre reinforcement material by use of a resin transfer moulding process. Each mould can comprise at least a first mould part and a second mould part that can be assembled to form a closed mould assembly, each mould part comprising a mould cavity. Thus, each mould part can be used so as to form separate shell parts of the wind turbine blade. The shell parts are then adhered to each other. The manufacturing line comprises a plurality of moulds, each of which comprising at least a first mould part comprising a first mould cavity, and more particularly two first mould parts each comprising a first mould cavity. The manufacturing line further comprises a gantry means movable along the manufacturing line. Fibre reinforcing material is arranged in the first mould cavity of each of the two first mould parts using the gantry means which is then moved to a second mould, and curable matrix material is supplied into the first mould cavity of each of the first mould parts, while substantially simultaneously fibre reinforcement material is arranged in the first mould cavity of two parallel second mould parts using the gantry means. The gantry means can be equipped with specialized and advanced equipment that is dedicated to the manufacturing step, i.e. arranging fibre reinforcement material, carried out by the gantry means, as the method reduces the required number of gantries. However, the method will also work with several gantries. The gantry means can also be automated, e.g. by using robots. The fibre reinforcement material can be dried (e.g. not pre-impregnated with resin) when arranged in the mould by the gantry means. By having the moulds aligned, it is very applicable to arrange a common gantry means for the number of moulds. The arranging of fibre reinforcement material in each of the separate mould parts can be carried out in automated way, the gantry means can either be shared by the separate mould part or separate gantries means for each separate mould part can be used.

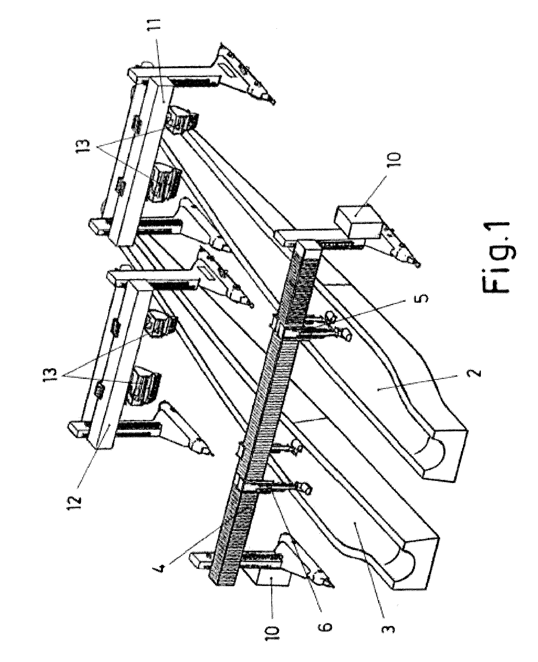

The publication entitled "Process automation for the production of large composite parts", published in REINFORCED PLASTICS, ELSEVIER ADVANCED TECHNOLOGY, NEW YORK, NY, US, vol. 49, n° 1, 1 January 2005, pages 30-33, discloses that gantry system equipped with automatic tool change offer an economic way of automating various process steps. It reports that these gantry systems offer the possibility to fulfill almost any single process step via a single universal manipulator gantry. Concerned are the large composite parts manufactured by implementing dry fabric processes which are followed by infusion of a resin matrix. Multi-tasking capability gantry systems, using up-to-date industrial robots "off the shelf" are able to generate access to the workpiece on an economic basis, the limitation to the working envelope lying only in the size of the gantry used, and this publication shows a single large-size gantry used for manufacturing long wind turbine blades in its figure 1. Most gantry systems are capable of an automated, tool-free exchange of their respective end-effectors, using a multiple tool crib, and with these capabilities a gantry offers an economic means to automate various process steps. These steps include gripping and placement of materials into the mould, with the gripping system working with the same gantry as described for the other process steps. When stitching systems are used for preparing prefabricated packages of fabric, or shaped dry preforms, the same manipulator system can be used for the stitching, pick and place and other steps including even the mould production.

With respect to placement, the most comprehensive solution recently developed uses a type of end-effector that allows the placement of fabric directly from the roll into the mould. When placing dry fabric, the resin can be metered simultaneously in the placement head. Another solution allows automated impregnation of fabric on a 2D laminating system with a subsequent manual or semi-automated placement. Such systems have already found a place in the production of wind turbine blades, and represent the first step on the way to a complex automation system. Besides tape placement, new multi-purpose placement systems have been developed for a far wider range of applications. Large fabric parts can be produced in automated processes, grippers guarantee single stacks of pre-cut fabrics without damage and accurate placement into the mould, precision feed end-effectors can work with any fabric and robotic stitching systems for shaping or reinforcement of preforms are available. All these new developments are capable of cooperating on the same manipulator system, allowing producers to reduce costs and processing time substantially.

The publication entitled "Robots speed lay-up of composite materials" published in REINFORCED PLASTICS, ELSEVIER ADVANCED TECHNOLOGY, NEW YORK, NY, US, vol. 47, n° 4 on 1st April 2003, pages 44-47, describes a system which uses robot to lay-up composite materials quickly and accurately. This system, called the PFE (Precision Feed Endeffector) device and technology, has been designed to precisely place or lay-up fiber fabric parts, and incorporates several primary and optional features, including a material feed system, a take up system, a profiling (cutting) system, a waste extraction system, an optional reactivation system, and an active suspension system playing a significant part in the lay-up or placement of the material. UV curing is a feature which was added to the PFE device to allow for translucent composite materials to be cured as the material is being placed. To exploit the commercial robot's flexibility, case of programming and implementation, incorporating robots within systems such as gantries extends the robots' reach and provides for the integration of additional process support systems to enhance the activity for which the system is designed. The gantry systems described in this publication is noteworthy in systems for industries including wind energy systems. The gantry provides the structure by which the PFE device is underslung, and a robot may be inserted into the system to perform a variety of process functions including polishing and buffing, specialized machining, material handling and, of course, the lay-up of composite materials. Robots may also be used to spray on gel-coat, release agents and paint, and through the use of force sensing attachments to the robot, buffing and polishing of the product can be performed. These gantries may have more than one robot and more than one gantry within the same cell and be controlled by the same HMI (Human Machine Interface). With such features, multi-tasking may be performed to satisfy through-put requirements. Single or dual-gantry systems lend themselves nicely to the construction of long, linear, three-dimensional (3D) parts such as wind turbine blades. Through the use of multi-axis positioners coupled to the robot system, complicated lay-ups can be realized. These systems are controlled by the robot controller itself with a variety of HMI configurations available. The offline programming may be done with a variety of commercially available solid modeling and kinematic modeling tools on the market. Calibration for such systems may be performed with a variety of laser tracking systems, providing accurate kinematic models for the offline programming software. Vision systems may also be employed in the system to provide verification and documentation that the part has been constructed within the design criteria and meets the standards of quality desired.

### Object of the Invention

The invention proposes a system for the manufacture of wind turbine blades by means of forming two halves like "shells" in respective die halves, based on a dry fiber "cloth" with an embodiment implementing an automatic process, overcoming the drawbacks of the conventional system that is implemented manually.

The system according to the invention is the subject-matter of claim 1. Advantageous embodiments are the subject-matter of dependent claims 2-5. According to this system, a common gantry structure is arranged with respect to the die halves for forming the "shell" components of the blade, said structure being provided with two heads which are susceptible to incorporating paint, adhesive or demolding agent application accessories, and machining accessories for forming rough surfaces in the adhesive application areas, as well as for the planing and outer sanding of the area of attachment of the "shells", whereas another individual gantry structure provided with two heads intended for placing the "cloth" in the application areas is arranged with respect to each die half, said heads incorporating cutting elements for trimming the "cloth" mat which is applied when needed according to the shape of the application areas so that there are no surplus parts.

Nozzle-bearing accessories which are replaced in the heads of the common gantry structure arranged above the die halves are used for applying paint, adhesive and demolding agent, the corresponding deposits of the products to be applied being associated with said common gantry structure, whereas an application control system is arranged with respect to the system for applying those products.

Said product application control can be by means of measuring the product outflow rate through the application nozzles combined with a machine vision system for viewing the surface of the product that is applied, such that the thickness of the application layer with a controlled forward movement speed is verified by means of the flow rate and surface color parameters. Another application control option is to use two line lasers combined with a machine vision system such that the thickness of the applied product layer is determined by means of controlling the geometry of the application areas.

The heads of the individual gantry structures of the die halves are provided for different widths of the "cloth" to be applied, there being a control system by means of line laser and machine vision with respect to said heads to assure the correct placement of the "cloth" in the application areas.

A system is thereby obtained which automatically performs the operations of the process for the manufacture of wind turbine blades, avoiding the mistakes that may result from depending on people affecting the conventional system of the same application, while at the same time the process is simplified and the blade manufacturing time reduced.

### Description of the Drawings

Figure 1 shows a general perspective view of the installation of the proposed system according to one embodiment.
Figure 2 shows a perspective view of a multi-nozzle paint application accessory which can be incorporated in the heads of the common gantry structure that is arranged above the two die halves.
Figure 3 shows a perspective view of an adhesive application accessory which can be incorporated in the same heads of the common gantry structure arranged above the die halves.
Figure 4 shows a perspective view of a machining accessory which can in turn be incorporated in said heads of the common gantry structure arranged above the die halves.
Figure 5 shows a perspective view of a "cloth" mat applicator head of the type in the individual gantry structures arranged above the die halves.
Figure 6 is a perspective view of an enlarged detail of the end part of the head of the preceding figure, showing the adaptation to the shape of an application area.
Figure 7 is a front view of the detail of the preceding figure.

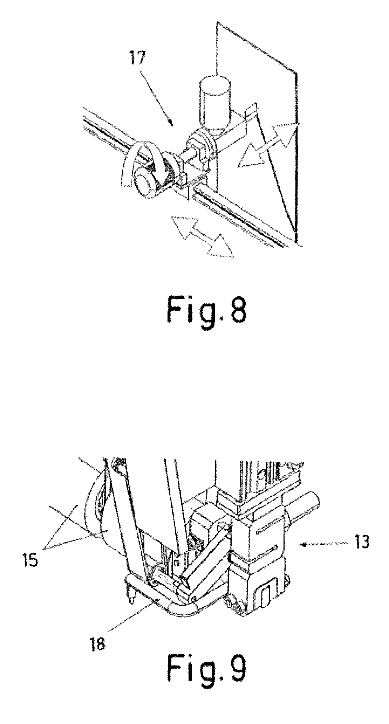

Figure 8 is a perspective view of an enlarged detail of the cutting element incorporated in the "cloth" mat applicator heads.
Figure 9 is a perspective view of an enlarged detail of adhesive projection element incorporated in the applicator heads for fixing the "cloth" in the areas where it tends to fall.

### Detailed Description of the Invention

The object of the invention relates to a system for the manufacture of wind turbine blades by means of applying dry fiber "cloth" mats (1), above two die halves (2 and 3) where respective halves or "shells" are formed making up the body of the desired blade when attached to one another.

The process for the manufacture of the wind turbine blades according to the proposed system is done by means of an installation consisting of a common gantry structure (4) arranged above the assembly of the two die halves (2 and 3), one of which is fixed and the other one being susceptible of being turned over onto the former to attach the "shells" formed therein in opposition.

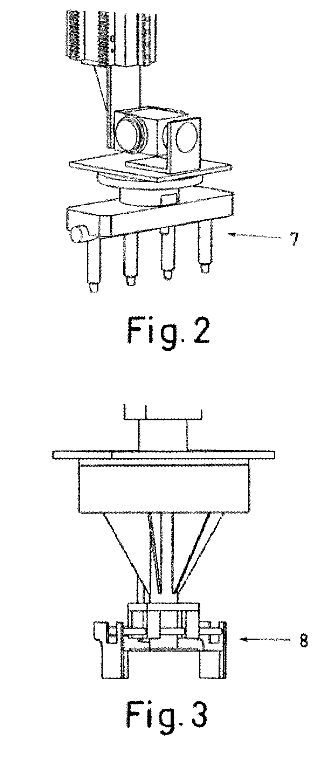

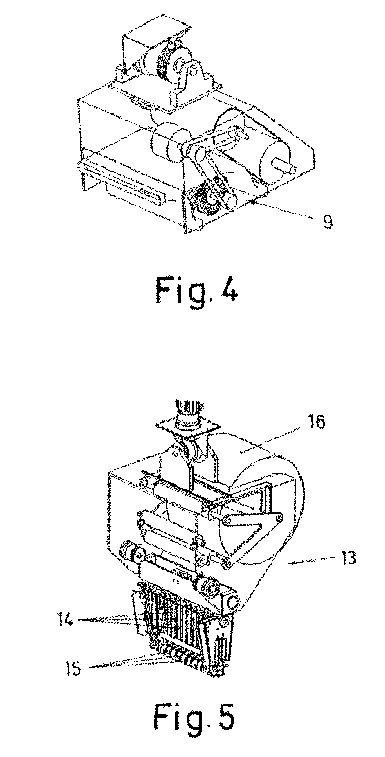

Two heads (5 and 6) intended for operating respectively on the die halves (2 and 3) are arranged in said gantry structure (4), said heads (5 and 6) being able to have replaceable accessories for performing different types of operations, such as a multi-nozzle paint application accessory (7), depicted in Figure 2, an adhesive application accessory (8), depicted in Figure 3, and a machining accessory (9), for example for rough sanding, depicted in Figure 4; there being deposits (10) containing the products to be applied in the gantry structure (4) itself.

The accessories (7, 8 and 9) as well as the different multi-nozzle paint or demolding agent application accessories (7) are automatically replaced from a warehouse for the operations in which each of them is required.

Respective individual gantry structures (11 and 12) are further arranged above each of the die halves (2 and 3), each of which incorporates two heads (13) intended for applying the "cloth" mats (1) in the corresponding areas of the die halves (2 and 3).

The heads (13) of each individual gantry structure (11 and 12) have the same structural formation but a different width, such that one of them can be used with "cloth" mats (1) having a width less than a certain value, whereas the other one can be used with "cloth" mats (1) having a greater width.

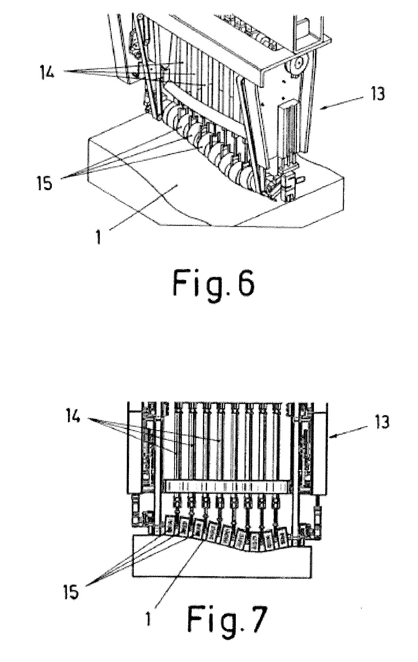

As can be seen in Figures 5 to 7, each of said heads (13) is made up of a plurality of pneumatic cylinders (14), which are connected at the end of their rod to a shaft where there is assembled a series of rollers (15), the assembly of which can be adapted to different curve shapes, forming a continuous hold-down plate for applying the "cloth" mats (1) on the different areas of the die halves (2 and 3). The assembly of the pneumatic cylinders (14) together with the rollers (15) associated with them are arranged in an assembly which allows adjusting the width for being adapted to the width of the "cloth" mats (1) used in each case.

An automatic loader (not depicted) incorporating the reels (16) of the "cloth" mats (1) is provided in a threading arrangement with respect to said heads (13), which allows achieving reel (16) changing times that are less than fifteen seconds. This is an advantageous reduction of the process time for manufacturing wind turbine blades, because manufacturing a blade requires placing over two-hundred layers of "cloth" (1) to form each "shell", it being necessary to move between forty and fifty reels, over half of which are large, being able to weigh nine-hundred kilos, making it necessary to change the reels in the process for manufacturing a blade about a hundred times.

Therefore, the wind turbine blade is manufactured with the system of the invention as follows:

The demolding agent is applied in the die halves (2 and 3) and then this is painted with a paint referred to as gel-coat, intended for forming the outer surface of the blade to be manufactured through the appropriate multi-nozzle accessories (7).

For the mentioned demolding agent and gel-coat paint application, it is envisaged that the installation itself incorporates an application control system (not depicted) which control can be by means of measuring the outflow rate from the corresponding multi-nozzle accessory (7), combined with a machine vision system which controls the color of the surface of the applied product, such that with the flow rate and color parameters it is verified through an established program that the application of the product is correct, because a specific flow rate and controlled forward movement speed determine the application material thickness. Said control can also be done by using two line lasers combined with a machine vision system, such that the assembly allows controlling the geometry of the areas of the die halves (2 and 3), determining the thickness of the necessary layer of material.

After applying the gel-coat paint, the heads (13) of the individual gantry structures (11 and 12) begin operating, depositing the "cloth" mats (1) on the die halves (2 and 3).

Said heads (13) have a cutting system (17), whereby they cut the "cloth" (1) that is applied so that it is within established tolerances depending on the areas of the die halves (2 and 3) where the cloth will be applied, i.e., the "cloth" (1) to be applied is patterned in the heads (13) themselves, so that there is no projecting surplus on the edges of the formation of the "shells" component of the blade being manufactured.

The heads (13) themselves further have an adhesive projection nozzle (18) for fixing the "cloth" (1) in the application areas where it tends to fall as it is vertical. Said nozzle (18) can be replaced with a sewing unit for fixing the "cloth" (1) in the mentioned areas where it tends to fall.

A control system (not depicted) is also arranged with respect to said heads (13), said control preferably being by means of line laser and machine vision to assure that the "cloth" mats (1) are suitably arranged in the placement areas without creases, air pockets or similar defects.

Once the entire "cloth" (1) assembly for forming the corresponding "shell" in each die half (2 and 3) is deposited, the necessary resin is infused and it is cured, to later machine the areas intended for attaching the "shells" to one another by means of the heads (5, 6) of the gantry structure (4) themselves for the purpose of determining a rough surface in said areas which allows better actuation of the bonding adhesive.

To that end, the areas to be machined and the bonding adhesive application path are established by means of the line laser and machine vision systems, said adhesive being applied by means of the heads (5, 6) with the corresponding accessory (8) incorporated therein.

After applying the adhesive, the movable die half (3) is turned over onto the fixed die half (2) such that the "shells" formed therein are attached to one another by the glued areas, determining the assembly of the wind turbine blade.

The die halves (2 and 3) are removed when the blade is thus formed, and all the dimensions and shapes are determined through the line laser and machine vision systems for the same heads (5, 6) of the gantry structure (4) to plane and sand the outer part of the attachment between the "shells" so that the outer surface of the formed blade is perfectly uniform, so the attachment line between the "shells" is checked with accuracy by means of line laser and machine vision systems, planing and sanding the defined path based on said attachment line and the areas located thereon which need to be touched up. A protective layer using gel-coat paint or other materials is applied on the assembly of the blade after planing and sanding the attachment to prevent external agents from affecting the outer surface.

For the sake of simplicity of the description, the installation of the system has been considered with two die halves (2 and 3) for the manufacture of a wind turbine blade, but the system is also applicable for manufacturing several blades at a time, the gantry structures (4, 11 and 12) being able to be shared either by moving said structures with respect to the different assemblies of die halves (2 and 3), or by moving the latter with respect to the mentioned structures.

In the same sense, the common gantry structure (4) has been provided for incorporating the elements for "dirty" operations (painting, adhesive application, machining) separately from the operating elements for placing the "cloths" (1).

## Claims

1. A system for the automatic manufacture of wind turbine blades, of the type having two die halves (2, 3) in which are molded two complementary "shells" whereby the attachment thereof determines the blade to be formed, each of the "shells" being formed in the respective die halves (2, 3) by a "cloth" (1) determined by means of applying dry fiber mats to which the resin necessary for consolidation curing is incorporated after the application, the system having a gantry structure with head-bearing means (5, 6, 13) arranged with respect to the die halves (2, 3), said head-bearing means being susceptible to selectively having multi-nozzle demolding agent or paint application accessories (7), an adhesive application accessory (8), or a machining accessory (9), , and said head-bearing means determining a structural assembly capable of applying the "cloth" mats (1) in the die halves (2, 3), the entire assembly operating automatically,
**characterized in that** said gantry structure comprises :
- a common gantry structure (4) arranged above the assembly of the die halves (2, 3), in which common gantry structure heads (5, 6) are incorporated for operating each of said heads (5, 6) respectively on one of the die halves (2, 3) to selectively having said multi-nozzle demolding agent or paint application accessories (7), said adhesive application accessory (8) or said machining accessory (9), there being in said common gantry structure (4) itself deposits (10) having the products to be applied by means of said heads (5, 6), and
- respective individual gantry structures (11, 12) arranged above the die halves (2, 3), in each of which individual gantry structures two heads (13) having identical structural formation but different widths are incorporated for applying therewith "cloth" mats (1) of different widths in the respective die halves (2, 3).

2. The system for the automatic manufacture of wind turbine blades according to claim 1, **characterized in that** each head (13) comprises a plurality of pneumatic cylinders (14) which are connected at the end of their rods to a shaft where there is assembled a series of rollers (15), the assembly of which can adopt variable curve shapes, determining a continuous hold-down plate for applying the "cloth" mats (1) on different areas of the die halves (2, 3), the width of the assembly being adjustable for being adapted to cloth mats (1) of different widths.

3. The system for the automatic manufacture of wind turbine blades according to claim 1, **characterized in that** the heads (13) have a cutting system (17) for trimming the "cloth" mats (1) depending on the areas of the die halves (2, 3) on which the mats are going to be applied.

4. The system for the automatic manufacture of wind turbine blades according to claim 1 , **characterized in that** the heads (13) have a system for fixing the "cloth" mats (1) by gluing or sewing them in the vertical areas where the mats tend to fall.

5. The system for the automatic manufacture of wind turbine blades according to claim 1, **characterized in that** controls formed by a combination of line laser and a machine vision system are arranged for the operating functions of applying products and of placing the "cloth" mats (1), whereby the application areas in the die halves (2, 3) and the thickness of the layers that are applied are determined.

## Patentansprüche

1. System zur automatischen Herstellung von Windturbinenrotorblättern des Typs, der zwei Matrizenhälften (2, 3) aufweist, in denen zwei komplementäre "Schalen" geformt werden, wobei die Befestigung derselben das auszubildende Rotorblatt bestimmt, wobei jede der "Schalen" in den jeweiligen Matrizenhälften (2, 3) durch ein "Tuch" (1) ausgebildet wird, das durch Anwenden trockener Fasermatten bestimmt wird, in die nach dem Anwenden das zur Festigung bzw. Härtung erforderliche Harz eingebracht wird, wobei das System eine Gantry-Struktur mit in Bezug auf die Matrizenhälften (2, 3) angeordneten Kopflagermitteln (5, 6, 13) aufweist, wobei die Kopflagermittel wahlweise Mehrfachdüsen-Formtrennmittel- oder Farbauftragszubehör (7), ein Klebstoffauftragszubehör (8) oder ein Bearbeitungszubehör (9) aufweisen können und wobei die Kopflagermittel eine strukturelle Anordnung bestimmen, die in der Lage ist, die "Tuch"-Matten (1) in den Matrizenhälften (2, 3) anzuwenden, wobei die gesamte Anordnung automatisch arbeitet,
**dadurch gekennzeichnet, dass** die Gantry-Struktur Folgendes umfasst:
- eine gemeinsame Gantry-Struktur (4), die über der Anordnung der Matrizenhälften (2, 3) angeordnet ist, in die Köpfe (5, 6) der gemeinsamen Gantry-Struktur eingebracht sind, um jeden der Köpfe (5, 6) jeweils auf einer der Matrizenhälften (2, 3) zu betreiben, um wahlweise das Mehrfachdüsen-Formtrennmittel- oder das Farbauftragszubehör (7), das Klebstoffauftragszubehör (8) oder das Bearbeitungszubehör (9) zu erhalten, wobei sich in der gemeinsamen Gantry-Struktur (4) selbst Depots (10) befinden, die das mit Hilfe der Köpfe (5, 6) aufzutragende Produkt aufweisen, und
- jeweilige einzelne Gantry-Strukturen (11, 12), die über den Matrizenhälften (2, 3) angeordnet sind, in die jeweils Doppelköpfe (13) der einzelnen Gantry-Strukturen eingebracht sind, die eine identische strukturelle Ausbildung aufweisen, wobei jedoch unterschiedliche Breiten eingebracht sind, um damit "Tuch"-Matten (1) unterschiedlicher Breiten in die jeweiligen Matrizenhälften (2, 3) einzulegen.

2. System zur automatischen Herstellung von Windturbinenrotorblättern nach Anspruch 1, **dadurch gekennzeichnet, dass** jeder Kopf (13) eine Mehrzahl pneumatischer Zylinder (14) umfasst, die am Ende ihrer Stangen mit einer Welle verbunden sind, wo eine Reihe von Rollen (15) montiert ist, deren Baugruppe verschiedene Kurvenformen annehmen kann, die eine kontinuierliche Niederhalteplatte zum Anwenden der "Tuch"-Matten (1) auf verschiedene Bereiche der Matrizenhälften (2, 3) bestimmen, wobei die Breite der Baugruppe verstellbar ist, um an "Tuch"-Matten (1) unterschiedlicher Breiten angepasst zu werden.

3. System zur automatischen Herstellung von Windturbinenrotorblättern nach Anspruch 1, **dadurch gekennzeichnet, dass** die Köpfe (13) ein Schneidsystem (17) zum Beschneiden der "Tuch"-Matten (1) in Abhängigkeit von den Bereichen der Matrizenhälften (2, 3), auf welche die Matten angewandt werden sollen, aufweisen.

4. System zur automatischen Herstellung von Windturbinenrotorblättern nach Anspruch 1, **dadurch gekennzeichnet, dass** die Köpfe (13) ein System zum Befestigen der "Tuch"-Matten (1) durch Kleben oder Nähen derselben in den vertikalen Bereichen, in denen die Matten herunterfallen können, aufweisen.

5. System zur automatischen Herstellung von Windturbinenrotorblättern nach Anspruch 1, **dadurch gekennzeichnet, dass** Steuerungen, die durch eine Kombination aus einem Linienlaser und einem Bildverarbeitungssystem ausgebildet sind, für r die Betriebsfunktionen zum Anwenden von Produkten und zum Anordnen der "Tuch"-Matten (1) angeordnet sind, womit die Anwendungsbereiche in den Matrizenhälften (2, 3) und die Stärke der aufzubringenden Schichten bestimmt werden.

## Revendications

1. Système de fabrication automatique de pales d'éoliennes, du type ayant deux demi-moules (2, 3), dans lesquels sont moulées deux « coques » complémentaires, de sorte que leur fixation détermine la pale à former, chacune desdites « coques » étant formée dans les demi-moules respectifs (2, 3) par un « tissu » (1) déterminé par des moyens d'application de mats de fibres sèches auxquelles la résine nécessaire au durcissement par consolidation est incorporée après l'application, le système ayant une structure de portique avec des moyens d'appui de têtes (5, 6, 13) aménagés par rapport aux demi-moules (2, 3), lesdits moyens d'appui de têtes étant susceptibles d'avoir sélectivement un agent de démoulage multibuse ou des accessoires d'application de peinture (7), un accessoire d'application d'adhésif (8) ou un accessoire d'usinage (9), et lesdits moyens d'appui de têtes déterminant un ensemble structurel capable d'appliquer les mats de « tissu » (1) dans les demi-moules (2, 3), la totalité de l'ensemble fonctionnant automatiquement,
**caractérisé en ce que** ladite structure de portique comprend :
- une structure de portique commune (4) aménagée au-dessus de l'ensemble des demi-moules (2, 3), dans lequel les têtes (5, 6) de la structure de portique commune sont incorporées pour faire fonctionner chacune desdites têtes (5, 6), respectivement sur l'un des demi-moules (2, 3) pour avoir sélectivement ledit agent de démoulage multibuse ou les accessoires d'application de peinture (7), ledit accessoire d'application d'adhésif (8) ou ledit accessoire d'usinage (9), de sorte qu'il y ait dans ladite structure de portique commune (4) elle-même des dépôts (10) présentant les produits à appliquer au moyen desdites têtes (5, 6) et
- des structures de portique individuelles respectives (11, 12) aménagées au-dessus des demi-moules (2, 3) sur chacune desquelles structures de portique individuelles deux têtes (13) ayant une formation structurelle identique, mais différentes largeurs, sont incorporées pour y appliquer des mats de « tissu » (1) de différentes largeurs dans les demi-moules respectifs (2, 3).

2. Système de fabrication automatique de pales d'éolienne selon la revendication 1, **caractérisé en ce que** chaque tête (13) comprend une pluralité de vérins pneumatiques (14) qui sont raccordés, à l'extrémité de leurs tiges, à un arbre où sont assemblés une série de galets (15), dont l'ensemble peut adopter des formes incurvées variables, déterminant une plaque de maintien continue pour appliquer les mats de « tissu » (1) sur différentes zones des demi-moules (2, 3), la largeur de l'ensemble pouvant être ajustée pour s'adapter à des mats de tissu (1) de différentes largeurs.

3. Système de fabrication automatique de pales d'éolienne selon la revendication 1, **caractérisé en ce que** les têtes (13) ont un système de coupe (17) pour rogner les mats de « tissu » (1) en fonction des zones des demi-moules (2, 3) sur lesquelles les mats vont être appliqués.

4. Système de fabrication automatique de pales d'éolienne selon la revendication 1, **caractérisé en ce que** les têtes (13) ont un système pour fixer les mats de « tissu » (1) en les collant ou en les cousant dans les zones verticales où les mats ont tendance à tomber.

5. Système de fabrication automatique de pales d'éolienne selon la revendication 1, **caractérisé en ce que** des commandes formées par une combinaison de laser linéaire et d'un système de vision machine sont aménagées pour les fonctions opérationnelles d'application de produits et de mise en place des mats de « tissu » (1), de sorte que les zones d'application dans les demi-moules (2, 3) et l'épaisseur des couches qui sont appliquées soient déterminées.
